# EUROPÄISCHE PATENTSCHRIFT

(11) **EP 0 398 002 B1**
(45) Veröffentlichungstag und Bekanntmachung des Hinweises auf die Patenterteilung: **22.12.1993**
(21) Anmeldenummer: 90105968.3
(22) Anmeldetag: 29.03.1990
(51) Int. Cl.: G01N 29/22

(54) **Vorrichtung zur automatischen Ultraschallprüfung der Endbereiche von Rohren**
Device for the automatic ultrasonic inspection of tube ends
Dispositif pour l'examen automatique par ultra-son des extrémités de tuyaux

(30) Priorität: 18.05.1989 DE 3916122
(43) Veröffentlichungstag der Anmeldung: 22.11.1990
(73) Patentinhaber: Hoesch Maschinenfabrik Deutschland Aktiengesellschaft, 44016 Dortmund (DE); Sobotta GmbH Sondermaschinenbau, D-53819 Neunkirchen-Seelscheid (DE)
(72) Erfinder: Sobotta, Kurt S., Dipl.-Ing., D-5206 Neunkirchen-S1 (DE); Wahl, Hans Jürgen, Dipl.-Phys., D-4400 Münster (DE)

(56) Entgegenhaltungen:
- DE-A- 2 559 125
- US-A- 4 550 605
- US-A- 4 586 379
- US-A- 4 655 085

## Beschreibung

Die Erfindung betrifft eine Vorrichtung zur automatischen Ultraschallprüfung der Endbereiche von Rohren gemäß den Merkmalen im Oberbegriff des Hauptanspruchs.

Die automatisierte zerstörungsfreie Ultraschallprüfung nimmt bei der Herstellung von Rohren als qualitätssichernder und fertigungsüberwachender Produktionsschritt eine immer wichtigere Position ein, je weiter die Fertigung selbst automatisiert und die Fertigungsgeschwindigkeit erhöht wird.

Bei einer kontinuierlichen oder auch diskontinuierlichen Fertigung von Rohren unterscheidet man hier grundsätzlich zwischen der Prüfung des Rohrkörpers und der Prüfung des Rohrendes.
Die automatische Prüfung des Rohrkörpers auf Werkstoffungänzen erfolgt im allgemeinen durch mit Wasser angekoppelte Prüfköpfe, welche spiralförmig oder parallel zur Rohrachse auf der Rohroberfläche entlang gleiten.
Die Prüfköpfe sind hierbei üblicherweise fest installiert, während das Rohr translatorisch und/oder rotatorisch bewegt wird.
Bei angepaßter Ankopplungskontrolle und Auswerteelektronik und bei entsprechender Kalibrierung und Einstellung der Prüfempfindlichkeit läßt sich ein stabiler und sicherer Prüfzustand über den gesamten Rohrkörper erreichen.

Durchlaufen jedoch die Anfangs- oder Endbereiche der Rohre eine solche Prüfanlage, so wird im wesentlichen aufgrund der Endengeometrie und der nicht mehr sicheren Ankopplung dieser stabile und stationäre Prüfzustand gestört.

Die Prüfergebnisse sind nicht mehr reproduzierbar und können dementsprechend keine Qualitätsaussage geben.

Je nach Ausführung der auf dem Rohr gleitenden Prüfkopfhalter und je nach Ankopplungsprinzip durch Eintauchtechnik (Immersionstechnik), durch Freistrahlen oder durch Wasserkammern ändert sich die Länge dieses "ungeprüften" Rohrendes.

Üblicherweise wird daher eine manuelle Ultraschall-Prüfung der Rohrenden der automatischen Rohrkörperprüfung nachgeschaltet. Durch dieses Verfahren wird aber die Produktionsgeschwindigkeit so stark verringert, daß in besonderen Fällen dem schnelleren Abschneiden der ungeprüften Rohrenden - auch unter Berücksichtigung des entstehenden Schrottanteiles - der Vorzug gegeben wird.

Insbesondere im Zuge der Rationalisierung wurde daher herstellerseitig das Bedürfnis nach einer an die heutigen Fertigungsgeschwindigkeiten angepaßten automatisierten Ultraschall-Prüfung der Rohrenden immer dringender.

Eine im Stand der Technik bekannte Teillösung besteht in der Anwendung eines Wasser-Freistrahles zur Ankopplung des Ultraschallsignals an die Werkstoffoberfläche.
Bei einem relativ geringen Durchmesser des Freistrahles kann der ungeprüfte Rohrendenbereich mindestens verkleinert, wenn nicht sogar vermieden werden.

Um jedoch Reflexionen an den freien Wänden des Freistrahles zu vermeiden, ist die Schall-Ausbreitungsrichtung im Freistrahl notwendigerweise parallel zur Freistrahlachse eingestellt.
Darüber hinaus wird bei der Freistrahltechnik die freie Strahlströmung laminarisiert, um auch Reflexionen zu vermeiden, die durch Dichteschwankungen in einem turbulenten Strahl entstehen können.

Durch diese Eigenarten des Freistrahles entsteht der Nachteil, daß die Einschallung immer senkrecht zur Prüflingsoberfläche erfolgt. Eine winkelige Einschallung ist, abgesehen von schräg auf die Werkstückoberfläche gerichteten und bezüglich der Einkopplung instabilen Freistrahlen, nur mit Verfahren möglich, die mit Hilfe vieler gleichgerichteter paralleler Freistrahlen unter Ausnutzung einer einstellbaren Phasenlage der Schwinger (phased array) eine Abwinkelung erreichen.
Solche Verfahren besitzen jedoch den Nachteil eines sehr großen Strahlkegels, der wiederum ein instabiles Prüfverhalten am Rohrende erzeugt.

Bekanntermaßen ermöglicht aber auch die normale senkrecht einschallende Freistrahlankopplung nur eine Wanddickenmessung bzw. eine Prüfung auf annähernd parallel zur Oberfläche orientierte Schalen und Dopplungen im Werkstoff. Eine Prüfung auf radial sich erstreckende Werkstoffungänzen mußte daher auch weiterhin im Rahmen einer Handprüfung erfolgen.

Außerdem wiesen die Freistrahlankopplungen den Nachteil auf, daß bei insbesondere dünnen Rohrwänden das Oberflächenecho zu stark und nicht von den übrigen Anzeigen zu trennen war.

Die DE-OS 25 59 125 zeigt eine Vorrichtung zur automatischen µltraschallprüfung kleiner und leichter rohrförmiger Körper, wie z.B. Weißmetallschalen für Gleitlager, bei der der gesamte Rohrkörper in einen Behälter mit Koppelflüssigkeit eingetaucht, in Rotation versetzt und mit einem parallel zur Prüfkörperlängsachse am Außenumfang des Körper verfahrbaren Ultraschall-Prüfkopf zerstörungsfrei geprüft wird. Hierbei werden auch die Endbereiche des Körpers automatisch prüfbar.

Ein Nachteil dieser Vorrichtung besteht jedoch darin, daß die Taktzeiten für die Prüfung relativ lang werden, da die zu prüfenden Körper einzeln eingesetzt und fixiert werden, der den Prüfkopf haltende Arm über den Behälter gefahren, justiert und eingetaucht wird und die Prüfköpfe zweimal über die Länge des zu prüfenden Körpers verfahren werden, bevor die übrigen Schritte in umgekehrter Reihenfolge und Bewegung erfolgen können.

Darüber hinaus ist eine solche Vorrichtung in keiner Weise dazu geeignet, Rohre zu prüfen, die in Längen von 6 bis 16 m und mit Gewichten von bis zu 1,5 to hergestellt und im gesamten Produktionsbereich mit im wesentlichen waagerecht liegender Längsachse bewegt werden.

Ähnliche Nachteile weist die durch die US-PS 3.529.466 beanspruchte Vorrichtung zur Prüfung von rohrförmigen Körpern mit einem Immersionsverfahren auf.
Auch hier sind die Endbereiche eines Rohrkörpers prüfbar, die Vorrichtung insgesamt jedoch auf kurze und relativ leichte zu prüfende Rohrstücke ausgelegt.

Rohre in den oben bereits genannten Abmessungen müßten - wenn auch die Möglichkeit besteht, die waagerechte Produktionslage einzuhalten - mittels Krananlagen in den Prüfrahmen eingespannt, mehrfach zur Vermeidung von Durchbiegungen unterstützt und unter Abdichtung der Enden mit dem Prüfrahmen und den entsprechenden Prüfvorrichtungen in die Wasserwanne eingetaucht werden. Die Taktzeiten einer solchen Handhabung sind innerhalb von Rohrfertigungsanlagen nicht akzeptabel.

Ein ferngesteuertes Ultraschall-Prüfsystem insbesondere für den Einsatz zur Kontrolle von Rohren in Kernkraftwerken offenbart die US-PS 4.586.379.

Die hier gezeigte Prüfvorrichtung bewegt sich um einen aus zwei Halbschalen bestehenden auf das zu prüfende Rohr aufgespanntem Führungsring. Die Prüfvorrichtung weist hierbei einen parallel zur Rohrachse sich erstreckenden, aus mehreren miteinander verbundenen Einzelprofilen bestehenden Kragarm auf. Dieser Kragarm wiederum beinhaltet eine durch einen Spindelantrieb in Richtung der Kragarmlängsachse verfahrbare Halteplatte für den Ultraschallprüfkopf bzw. für dessen zusätzlich senkrecht zur Rohrachse verfahrbare Halteeinrichtung.
Angetrieben wird die Prüfvorrichtung durch 3 Motoren und 1 Zylinder für die rotatorische Bewegung um das Rohr, für die translatorische Bewegung der Halteplatte, für eine Drehbewegung des Prüfkopfes um dessen Längsachse und für die translatorische Bewegung des Prüfkopfes in der senkrecht zur Rohrachse stehenden Achse.

Ein Nachteil dieser Prüfvorrichtung besteht darin, daß jeweils nur ein von der Kragarmlänge abhängiges Teilstück einer Rohrleitung oder eines Rohres geprüft werden kann, wonach der Führungsring wieder demontiert bzw. gelöst und an einer anderen Stelle fest gespannt werden muß, um mit der Prüfung weiterer Rohrabschnitte fortzufahren.

Eine solche Arbeitsweise ist für die Ultraschallprüfung von Rohrenden innerhalb eines Fertigungsbetriebes ungeeignet, da - wenn auch der eigentliche Prüfvorgang automatisch abläuft - durch das jeweilige Aufspannen der für einen kompletten Arbeitstakt nötige Zeitaufwand den einer einfachen manuellen Ultraschallprüfung noch übersteigt. Zum anderen kommt auch ein aufgesetzter gleitender Prüfkopf mit Wasserkammer zum Einsatz, der die bereits erwähnten Nachteile der Ankopplung in den Rohrendbereichen aufweist.

Ebenfalls im wesentlichen vorgesehen für den Einsatz zur Ultraschallprüfung von Rohren in Kernkraftwerken ist die in der US-PS 4.665.085 beanspruchte Vorrichtung.

Auch diese Prüfvorrichtung weist einen geteilten, auf ein Rohr aufsetzbaren Rahmenring (2) auf, der jedoch über Antriebsräder in Richtung der Rohrachse verfahrbar ist. An diesem Rahmenring ist ein über Ritzel angetriebener Rotorring (7) befestigt, der auch den Ultraschallprüfkopf trägt. Mehrere auf der Rohroberfläche rollende oder gleitende Sensorelemente überprüfen - zur Regelung der definierten Stellung des Prüfkopfes relativ zur Rohroberfläche - jegliche Abweichungen der Winkligkeit der Rahmenringachse zur Rohrachse sowie evtl. Drehbewegungen des Rahmenringes und geben entsprechende Signale an die Antriebselemente, die dann Ausgleichsbewegungen einleiten.

Auch diese Prüfvorrichtung müßte bei der Verwendung zur Prüfung von Rohrendbereichen jeweils zunächst aufgesetzt, justiert und nach der Prüfung wieder vom Rohrende abgenommen werden und benötigte für ihren Arbeitstakt wesentlich mehr Zeit als eine nur manuelle Prüfung. Auch die hier offenbarten Prüfköpfe und Ankopplungsmethoden weisen den bereits beschriebenen Nachteil auf, daß ein instationärer Prüfzustand am Rohrende nicht verhindert werden kann.

Desweiteren offenbart die DE-OS 33 01 329 eine Vorrichtung zur Ultraschall-Prüfung von mit Gewinde versehenen Rohrenden, die zwar keine automatisierte, aber immerhin eine durch Führungs- und Halteeinrichtungen vereinfachte manuelle Rohrendenprüfung gestattet.

Die Einkopplung des Ultraschall-Signals erfolgt hierbei über die Stirnflächen des Rohrendes durch Senkrechteinschallung.

Eine solche Schallführung und Einkopplung erlaubt sicher die zerstörungsfreie Prüfung auf gewindetypische Werkstopffungänzen, weist aber Unsicherheiten auf bei der Prüfung von Dopplungen und auch bei der Prüfung von z.B. Bindefehlern in Längsnähten.

Durch das manuelle Auf- und Absetzen, das Spannen und Lösen der verschiebbaren Rollen 11 und das Ankoppeln des Wandlers 5 wird zudem die Taktzeit zur Prüfung relativ lang.

Diese Vorrichtung ist daher eher für eine Feldprüfung der Rohre geeignet, die z.B. vor dem Verschrauben zum Rohrstrang und Abhängen in das Bohrloch stattfinden kann, nicht aber für die schnelle Serienprüfung in der Fertigung.

Für die Erfindung bestand daher die Aufgabe, eine Vorrichtung bereitzustellen, die eine schnelle an die Fertigungsgeschwindigkeit angepaßte vollautomatische Ultraschall-Prüfung der Rohrenden ermöglicht und unabhängig von der Rohrendenbearbeitung alle auftretenden Fehlertypen möglichst in einem Prüfzyklus erkennbar werden läßt.

Gelöst wird diese Aufgabe durch die kennzeichnenden Merkmale des Hauptanspruchs.

Vorteilhafte Weiterbildungen der erfindungsgemäßen Vorrichtung sind in den Unteransprüchen erfaßt.

Ausgehend von dem allgemeinen Erfindungsgedanken, daß nämlich eine schnelle vollautomatische Ultraschall-Prüfung aller Fehlertypen unabhängig von der Rohrgeometrie durch eine auch an den Rohrenden vorhandene Ankopplung mittels Eintauchtechnik erreichbar ist, besteht die erfindungsgemäße Lösung zunächst darin, daß ein zweiteiliges, aus Antriebskammer und Prüfkammer bestehendes Prüfgehäuse vorgesehen wird, dessen Längsachse waagerecht ist und mit der Längsachse des zu prüfenden Rohrendes übereinstimmt, wobei der prüfseitige Deckel der Prüfkammer mit einer zur äußeren Oberfläche des Rohrendes abdichtbaren Öffnung versehen ist.

Die mit waagerechter Längsachse während der gesamten Fertigung, Prüfung und Lagerung transportierten Rohre können dann vorteilhafterweise ohne großen Handhabungsaufwand mit einem Ende in die zunächst von Koppelflüssigkeit entleerte Prüfkammer eingefahren werden, wonach die Dichtung zwischen der Öffnung des prüfseitigen Deckels der Prüfkammer und der Rohraußenoberfläche aktiviert wird.

Wahlweise kann auch das Rohr in z.B. Prismenhalterungen oder auf einem Rollgang fixiert werden, bevor auf eines oder auf beide Rohrenden gleichzeitig die entleerte Prüfkammer aufgefahren und abgedichtet wird.

Zur sicheren Halterung und Spannung des in die Prüfkammer ragenden Rohrendes ist dort eine zentrisch angeordnete Anschlag- und Spanneinrichtung auf einer hohlen, in die Prüfkammer ragenden Achse drehfest angebracht.
Dadurch, daß die hohle Achse durch die ganze Länge der in der Achsverlängerung an die Prüfkammer anschließenden Antriebskammer bis durch den antriebsseitigen Deckel geführt und mit diesem drehfest verbunden ist, wird in vorteilhafter Weise ein Zuführen von Spann- oder Halteenergie von außen bis in das Rohrende ermöglicht.

Um nun bei vorteilhaft kompakter Bauweise ein für die Drehung von Prüfköpfen um das Rohrende nötiges Drehmoment in die Prüfkammer, jedoch nicht in das Rohrende zu übertragen, ist die hohle Achse in einer als Hohlwelle ausgebildeten Motorwelle gelagert und durch diese hindurchgführt.
Die Hohlwelle wiederum ist in dem antriebsseitigen Deckel und in einer Trennwand zwischen Antriebskammer und Prüfkammer drehbar gelagert, ragt unter Abdichtung zur Trennwand in die Prüfkammer und ist dort mit einer runden, im wesentlichen dem Innendurchmesser der Prüfkammer angepaßten Drehscheibe drehfest verbunden.

Durch eine solche Ausbildung der Drehscheibe wird - auch in Verbindung mit den auf ihr angeordneten weiteren Einrichtungen - nach Auffüllen der Prüfkammer mit Koppelflüssigkeit die gesamte, in der Prüfkammer befindliche im wesentlich waagerecht liegende Flüssigkeitssäule in Rotation versetzt. Hierdurch wird zum einen die Bildung von Luftblasen verhindert und zum anderen im Spalt zwischen den mit gleicher Drehgeschwindigkeit rotierenden Prüfköpfen und der Rohroberfläche ein quasi stationärer Zustand zwischen Koppelflüssigkeit und Prüfköpfen erreicht und störende Dichteschwankungen vermieden.

Die Drehscheibe weist hierbei auf ihrer dem Rohr zugewandten Seite eine oder mehrere zu ihrer Längsachse beabstandete aber parallele, sich im wesentlichen über die Prüfkammerlänge erstreckende Führungsstangen auf, auf denen längs der Rohroberfläche in an sich bekannter Weise verschiebbare Gleitkörper mit einer Einrichtung zur Aufnahme von Ultraschall-Prüfköpfen angeordnet sind.

Hierdurch wird es möglich, gleichzeitig beliebige vom Rohrende beabstandete Rohrquerschnitte durch rotierende Prüfkörper im stabilen Prüfzustand zu prüfen.

Mindestens einer der Gleitkörper ist über eine parallel zu seiner Führungsstange in der Drehscheibe und in einer Halteeinrichtung am prüfseitigen Kopfe dieser Führungsstange gelagerte Gewindespindel in an sich bekannter Weise über eine entsprechende mit zum Spindelgewinde komplementären Gewinde versehene Bohrung im Gleitkörper durch Drehung der Gewindespindel parallel zur Oberfläche des Rohrendes antreibbar.
Dies führt in dazu, daß eine schraubenförmige, evtl. in ihrer Steigung überlappende Prüfspur um den Rohrkörper entsteht, wodurch die Anzahl der Prüfköpfe, die bewegten Massen und damit die Baugröße auf ein Minimum reduziert werden können.

Eine vorteilhafte und ebenfalls kleinbauende Lösung zum Antrieb der Gewindespindel besteht darin, daß die Gewindespindel nahe ihrer Lagerung in der Drehscheibe ein drehfest mit dieser Gewindespindel verbundenes Ritzel aufweist, und daß eine hohle, durch eine entsprechende mittige Bohrung der Drehscheibe hindurch und über die Drehscheibe hinaus in die Prüfkammer ragende Achse mit einem zentrisch angeordneten Zahnrad verbunden ist, welches mit dem Ritzel im Eingriff steht.

Die Ausgestaltung der Spanneinrichtung mit einem im Rohrende angeordneten pneumatisch aufweitbaren Spannkörper, dessen Zufuhrleitung für das Spannmedium mit der hohlen Achse in Verbindung steht, gestattet eine vorteilhaft schnelle und durch Oberflächenunebenheiten unbeeinflußte Spannung des Rohrendes und führt damit sowohl zur Verringerung der Handlingszeiten während eines Prüfzyklus als auch zur sicheren Abdichtung des Rohrinneren gegenüber der Koppelflüssigkeit in der Prüfkammer.
Die Zufuhr des Spannmediums kann hier in der schon beschriebenen vorteilhaften Weise so erfolgen, daß die hohle Achse direkt als Leitung für das Spannmedium genutzt wird.

Ebenfalls zur schnellen und durch Unebenheiten der Rohroberfläche unbeeinflußten Abdichtung des Ringspaltes zwischen der Außenoberfläche des Rohrendes und der Öffnung des prüfseitigen Deckels ist eben diese Öffnung mit einer pneumatisch aktivierbaren Schlauchdichtung versehen.

Neben der auch hier erreichten Verringerung der Handlingszeit ist diese Schlauchdichtung im entspannten Zustand nachgiebig und toleriert Durchmesser- oder Ovalitätsabweichungen des Rohrendes problemlos.
Eine Beaufschlagung der Schlauchdichtung oder auch des Spannkörpers mit Vakuum erhöht diesen Effekt des problemlosen Einfahrens der Rohrenden.

Eine solche Ausgestaltung mit pneumatisch betätigbaren Spanneinrichtungen und pneumatisch betätigbaren Dichtungen im prüfseitigen Deckel erlaubt ebenfalls die Prüfung von Rohrenden mit nah beieinanderliegenden aber unterschiedlichen Durchmesserstufungen. Hiermit werden auch Umbauarbeiten und -zeiten weitgehend minimiert.

Unterstützt wird diese Verringerung der Umbauzeiten dadurch, daß ein in Einfahrrichtung vor dem Spannkörper befindlicher Zentrierdorn der Spanneinrichtung so ausgestaltet ist, daß sein Korpus aus abnehmbaren und mit ihrer Außenkontur ineinanderübergehenden kegelstumpfförmigen Scheiben besteht.

Ein Umbau der Prüfvorrichtung auf einen anderen Durchmesser eines zu prüfenden Rohrendes kann dann schnell durch Abnehmen oder Hinzufügen von entsprechenden kegelstumpfförmigen Scheiben so erfolgen, daß der sich ergebende Kegel-Fußdurchmesser des Zentrierdornes im wesentlichen dem Innendurchmesser des Rohrendes entspricht.

Zur einfachen und sicheren Übertragung von elektrischen oder magnetischen Signalen zwischen dem feststehenden Prüfgehäuse und den rotierenden, mit der Drehscheibe über Führungsstangen in Verbindung stehenden Prüfköpfen sind an der zur Antriebskammer weisenden Seite der Drehscheibe und an der ihr gegenüberliegenden Seite der Trennwand zueinander komplementäre ringförmige Übertragungselemente für solche Signale angeordnet.

Diese Übertragungslemente arbeiten je nach Art und Frequenzen der Trägersignale kapazitiv, induktiv oder mit Schleifkontakten und sind in einem von Koppelflüssigkeit freien Ringraum angeordnet, der durch schleifende und durch den Koppelflüssigkeitsdruck unterstützte Dichtungen zwischen Drehscheibe und Prüfgehäuse sowie zwischen Drehscheibe und Zahnrad gegenüber der Prüfkammer abgedichtet wird.

Vorteilhaft ist diese Anordnung dadurch, daß eine kompakte Bauweise bei einer großen Anzahl von Übertragungsspuren bzw. -kanälen erreicht wird und keine Beeinflussung der Signalübertragung durch Koppelflüssigkeit stattfindet.

Anhand eines Ausführungsbeispiels soll die erfindungsgemäße Prüfvorrichtung näher erläutert werden. Es zeigen:
- Fig. 1: Einen Längsschnitt durch eine erfindungsgemäße Prüfvorrichtung im Prüfzustand mit eingefahrenem Rohrende
- Fig. 2: Eine Teilansicht des Prüfraumes der anmeldungsgemäßen Prüfvorrichtung
- Fig 3: Einen aus kegelstumpfförmigen Scheiben bestehenden Zentrierdorn im Teilschnitt

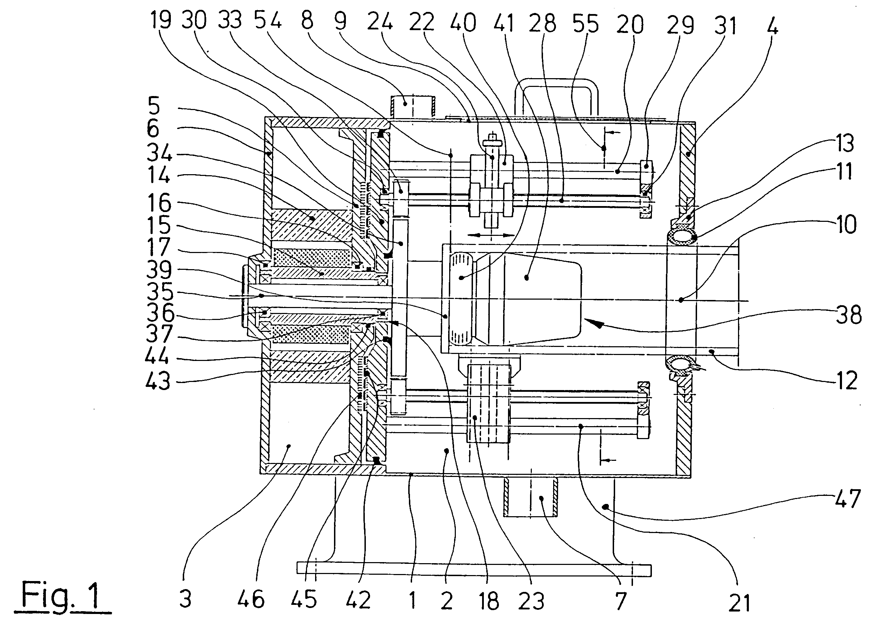

Fig. 1 zeigt das hohlzylinderförmige Prüfgehäuse 1 mit der Prüfkammer 2 und der Antriebskammer 3, welche in der Längsachse des Prüfgehäuses durch den prüfseitigen Deckel 4, die Trennwand 5 und den antriebsseitigen Deckel 6 begrenzt und abgetrennt werden .

Das Prüfgehäuse 1 besitzt im Bereich der Prüfkammer eine Zulauf- und eine Ablauföffnung 7 und 8 für eine Koppelflüssigkeit sowie eine obenliegende abgedichtete Kontrollöffnung 9.

Der prüfseitige Deckel 4 weist eine Öffnung 10 auf, die mit Hilfe einer pneumatisch betätigbaren Schlauchdichtung 11 zur Außenoberfläche des Rohrendes 12 abdichtbar ist. Hierbei wird die Schlauchdichtung 11 in einem Flansch 13 gehalten, der am prüfseitigen Deckel 4 angeschraubt und somit leicht auswechselbar ist.

In der Antriebskammer 3 befindet sich ein zentrisch angeordneter Hohlwellenmotor 14, dessen Hohlwelle 15 in der Trennwand 5 und in den antriebsseitigen Deckel 6 mittels der Lager 16 und 17 gelagert ist.

Das in die Prüfkammer 2 hineinragende Hohlwellenende 18 ist drehfest mit der Drehscheibe 19 verbunden, die in ihrem Außendurchmesser in etwa dem Innendurchmesser der Prüfkammer 2 entspricht.
Auf der dem Rohrende 12 zugewandten Seite der Drehscheibe 19 sind zwei Führungsstangen 20 und 21 befestigt, die sich in etwa über die Länge der Prüfkammer 2 erstrecken.
Auf den Führungsstangen 20 und 21 sind verschiebbar angeordnete Gleitkörper 22 und 23 geführt, die zur Aufnahme der Ultraschall-Prüfköpfe 24, 25, 26 und 27 dienen.

Parallel zur Führungsstange 20 verlaufend ist eine Gewindespindel 28 angeordnet, deren Enden in der Drehscheibe 19 und in der am Kopf der Führungsstange 20 angebrachten Halteeinrichtung 29 mit Hilfe der Lager 30 und 31 gelagert sind.

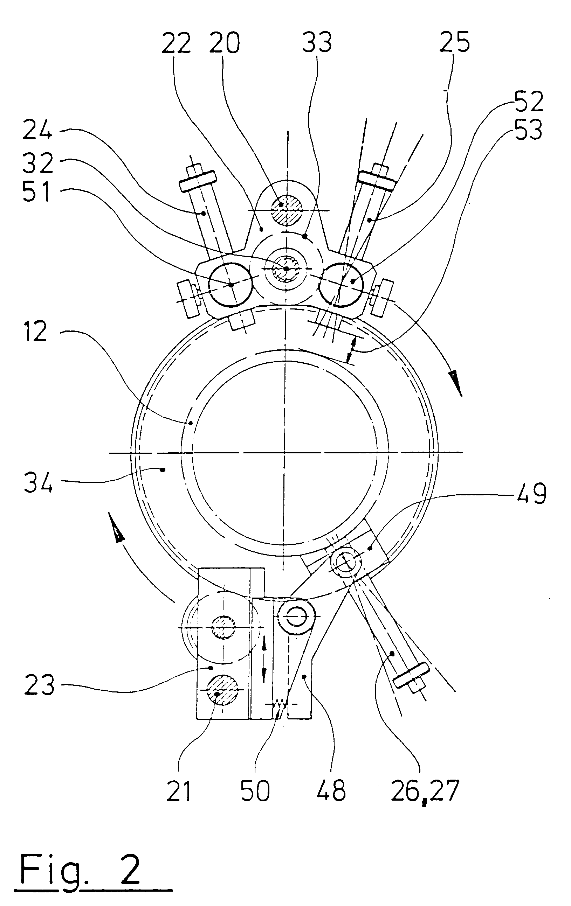

Die Gewindespindel 28 führt durch eine in der Fig. 2 dargestellte Gewindebohrung 32 im Gleitkörper 22, deren Innengewinde komplementär zum Spindelgewinde ausgebildet ist.

Nahe des Lagers 30 ist auf der Gewindespindel 28 ein drehfest mit ihr verbundenes Ritzel 33 angeordnet.
Dieses Ritzel 33 steht im Eingriff mit dem Zahnrad 34, welches drehfest mit der zentrisch angeordneten und über die Drehscheibe 19 hinaus in die Prüfkammer 2 ragenden hohlen Achse 35 verbunden ist.

Die hohle Achse 35 ist hierbei wiederum drehfest an dem antriebsseitigen Deckel 6 befestigt und durch diesen und durch die Hohlwelle 15 des Hohlwellenmotors 14 hindurchgeführt.

Die Lagerung der hohlen Achse 35 in der Hohlwelle 15 wird durch Lager 36 und 37 ermöglicht.

Mit dieser hohlen Achse 35 verbunden ist eine ebenfalls zentrisch angeordnete Anschlag- und Spanneinrichtung 38, bestehend aus einer Anschlagplatte 39, einem pneumatisch aufweitbaren Spannkörper 40 und einem Zentrierdorn 41.
Die Abdichtung zwischen Prüfkammer 2 und Antriebskammer 3 erfolgt über die durch den Druck der Koppelflüssigkeit zusätzlich beaufschlagbaren Dichtungen 42 und 43.
Eine zusätzliche Dichtung 44 schützt den Ringraum zwischen Drehscheibe 19 und der Trennwand 5 vor dem evtl. Eintritt von Motor- oder Lageröl.

Zur Übertragung der elektrischen Signale zwischen dem Prüfgehäuse 1 und den rotierenden Prüfköpfen 24, 25, 26 und 27 sind auf der Drehscheibe 19 und auf der Trennwand 5 kreisförmige, zueinander komplementäre kapazitive Übertragungselemente 45 und 46 angebracht.

Die im Ausführungsbeispiel dargestellt Prüfvorrichtung ist fest auf einer Konsole 47 montiert.

Zu Beginn des Prüfzyklus befindet sich noch keine Koppelflüssigkeit in der Prüfkammer 2. Der Hohlwellenmotor 14 ist abgeschaltet und der Spannkörper 4o sowie die Schlauchdichtung 11 unter Teilvakuum gesetzt.
Die Zufuhrleitungen des Spannmediums zum Spannkörper 40 sind hier nicht näher dargestellt, münden aber zentral in dem hohlen Innenraum der hohlen Achse 35.

Das Rohrende 12 wird bis zur Anschlagplatte 39 über den Zentrierdorn 41 in die Prüfkammer 2 eingefahren, worauf der Spannkörper 40 und die Schlauchdichtung 11 von innen mit Druckluft beaufschlagt und aktiviert werden.
Eine hier nicht dargestellte Hochdruckpumpe füllt die Prüfkammer 2 über die Zulauföffnung 7 mit Koppelflüssigkeit, die nach erfolgter Füllung aus dem Ablauf 8 überläuft.

Während des Einfahrens und Füllens ist der im Gleitkörper 23 gelagerte und in der Fig. 2 dargestellte Hebel 48 durch einen hier nicht näher dargestellten Elektromagneten in einer Ruhestellung so fixiert, daß die durch den Hebel angelenkte Prüfkopfhalterung 49 von der Oberfläche des Rohrendes 12 gehoben ist.

Nach dem Füllvorgang wird die Prüfkopfhalterung 49 in einem vorher eingestellten Abstand vom Rohrende durch Abschalten des Elektromagneten auf die Oberfläche des Rohrendes aufgesetzt und der Hohlwellenmotor 14 eingeschaltet. Den nötigen Anpreßdruck für die Prüfkopfhalterung 49 liefert die Feder 50.

Die Prüfköpfe 26 und 27 schallen hier senkrecht zur Rohroberfläche in den Körper des Rohrendes 12 und sind dadurch in der Lage, parallel zur Rohrobertläche liegende Fehler wie Dopplungen (laminations) oder Schalen aufzuspüren. Ihre Rotation um das Rohrende 12 erfolgt ortsfest auf der Führungsstange 21.

Die beiden Prüfköpfe 24 und 25 sind mit Hilfe von im Gleitkörper 22 befindlichen Einstelleinrichtungen 51 und 52 so zur Oberfläche des Rohrendes 12 ausgerichtet, daß eine winkelige Einschallung zur Detektion von im wesentlich parallel oder schräg zur Rohrachse ausgerichteten und sich radial im Rohrwerkstoff erstreckenden Fehlern ermöglicht wird.
Diese Prüfköpfe 24 und 25 besitzen einen Abstand 53 zur Rohroberfläche und können daher in ihrer Winkeligkeit beliebig voreingestellt werden, um die Echoamplituden für bestimmte Fehlerarten zu maximieren.

Das mit dem Zahnrad 34 im Eingriff stehende Ritzel 33 wälzt sich bei Drehung des Motors 14 und damit der Drehscheibe 19 auf dem Umfang des Zahnrades 34 ab, wodurch die Gewindespindel 28 ebenfalls dreht und den durch die Führungsstange 20 geführten Gleitkörper 22 mit seinen Prüfköpfen 24 und 25 von der Prüfausgangsposition 54 in die Prüfendposition 55 schiebt.

Die Rotation und die Verschiebung der beiden Prüfköpfe 24 und 25 führt dazu, daß - bei entsprechend ausgelegter Gewindesteigung der Gewindespindel 28 - der zwischen den beiden Endpositionen 54 und 55 liegende Rohrendenbereich mit einer überlappenden schraubenförmigen Prüfspur überstrichen wird.

Nach Erreichen der Endposition 55 stoppt der Hohlwellenmotor 14, die Koppelflüssigkeit wird durch Umschalten der Hochdruckpumpe auf Saugbetrieb aus der Prüfkammer 2 entleert und der Elektromagnet zur Rücknahme der Prüfkopfhalterung 49 aktiviert.
Der Spannkörper 40 und die Schlauchdichtung 11 werden druckentlastet und wiederum mit Vakuum beaufschlagt.
Das über sein Rohrende 12 geprüfte Rohr wird ausgefahren und ein neues Rohr mit noch ungeprüftem Rohrende in die Prüfkammer eingefahren.

Nach dem schon geschilderten Spannen des Rohrendes 12 mit Hilfe des Spannkörpers 40 und dem Aktivieren der Schlauchdichtung 11 wird die Prüfkammer 2 wieder mit Koppelflüssigkeit gefüllt, die Prüfkopfhalterung 49 durch Lösen des Elektromagneten aufgesetzt und der Hohlwellenmotor 14 - dieses Mal mit entgegengesetzter Drehrichtung - eingeschaltet und der Prüftakt beginnt von neuem, wobei lediglich die Prüfausgangsposition und die Prüfendposition vertauscht sind.

Die Prüfkopfhalterung 49 ist an ihrer Unterseite durch entsprechende Anlaufflächen selbstverständlich so ausgebildet, daß keine Auflaufbremswirkung einsetzen kann.

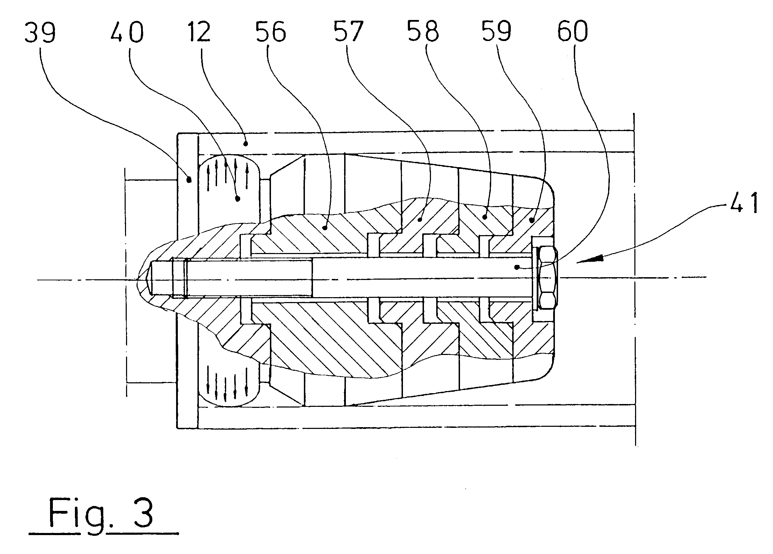

Fig. 3 zeigt noch einmal den aus kegelstumpfförmigen Scheiben bestehenden Zentrierdorn 41 im Teilschnitt.
Durch unterschiedliche Zusammenstellung der einzelnen Scheiben 56, 57, 58 und 59 können 4 verschiedene Rohrenden mit unterschiedlichen Innendurchmessern zentriert werden. Zur Befestigung der Scheiben wird jeweils eine in der Länge anders abgestufte Schraube 60 benutzt.

## Patentansprüche

1. Vorrichtung zur automatischen Ultraschallprüfung der Endbereiche von Rohren, wobei die Rohre während des Prüfzyklus festliegen
bestehend aus einem hohlzylinderförmigen Prüfgehäuse (1) mit einer Antriebskammer (3) und einer Prüfkammer (2),
wobei an einer oder mehreren zur Rohrachse parallelen Führungsstangen (20,21) längs der Rohroberfläche verschiebbare Gleitkörper (22,23) mit Einrichtungen zur Aufnahme von Ultraschallprüfköpfen (24,25,26,27) angeordnet sind und mindestens einer dieser Gleitkörper über eine parallel zu der Führungsstange angeordnete drehbare Gewindespindel (28) mittels eines in dem Gleitkörper befindlichen, zum Spindelgewinde komplementär ausgebildeten Gewindes durch Drehen der Gewindespindel parallel zur Rohrachse antreibbar ist, und wobei das prüfseitige, zum Rohr weisende Ende des Prüfgehäuses einen mit einer Öffnung (10) zur Aufnahme des Rohrendes versehenen prüfseitigen Deckel (4) aufweist,
und das antriebsseitige, dem Rohr abgewandte Ende des Prüfgehäuses eine mit einer zentrischen Öffnung zur Durchführung einer Antriebswelle versehene Trennwand (5) sowie einen mit einer zentrischen Öffnung zur Durchführung einer Achse versehenen antriebsseitigen Deckel (6) aufweist,
und die durch den prüfseitigen Deckel und die Trennwand begrenzte Prüfkammer des Prüfgehäuses eine Zulauf- und eine Ablauföffnung (7,8) für eine Koppelflüssigkeit sowie eine abgedichtete Kontrollöffnung (9) aufweist,
und die durch die Trennwand und den antriebsseitigen Deckel begrenzte Antriebskammer des Prüfgehäuses einen Motor (14) aufweist,
**dadurch gekennzeichnet,**
daß die Längsachse des Prüfgehäuses (1) waagerecht liegt und mit der Längsachse des zu prüfenden Rohrendes (12) übereinstimmt und daß die Öffnung (10) im prüfseitigen Deckel (4) zur äußeren Oberfläche des Rohrendes abdichtbar ausgebildet ist,
daß der Motor (14) zentrisch in der Antriebskammer (3) angeordnet, seine Drehmoment übertragende Welle als Hohlwelle (15) ausgebildet ist, in der Trennwand (5) und dem antriebsseitigen Deckel (6) gelagert ist und durch die Trennwand (5) und zu dieser abgedichtet in die Prüfkammer (2) hineinragt,
daß das in die Prüfkammer (2) hineinragende Hohlwellenende (18) drehfest mit einer runden im wesentlichen dem Innendurchmesser der Prüfkammer (2) angepaßten Drehscheibe (19) verbunden ist,
wobei auf der dem Rohrende (12) zugewandten Seite der Drehscheibe (19) die Führungsstangen (20, 21) angebracht und deren Achsen von der Achse der Drehscheibe (19) beabstandet, aber parallel zu ihr sind und die Führungsstangen (20, 21) sich im wesentlichen über die Prüfkammerlänge erstrecken,
und wobei die parallel zur Führungsstange (20) angeordnete Gewindespindel (28) des antreibbaren Gleitkörpers (22) in der Drehscheibe (19) und in einer Kalteeinrichtung (29) am prüfseitigen Kopf der zugehörigen Führungsstange (20) gelagert und nahe ihrer Lagerung (30) in der Drehscheibe (19) ein drehfest mit der Gewindespindel (28) verbundenes Ritzel (33) aufweist,
daß eine durch den antriebsseitigen Deckel (6) hindurchgeführte hohle Achse (35) vorhanden ist, die drehfest mit diesem antriebsseitigen Deckel (6) verbunden sowie durch die Hohlwelle (15) des Motors (14) geführt und in dieser Hohlwelle (15) gelagert ist,
daß die hohle Achse (35) durch eine dem Hohlwellenende (18) entsprechende mittige Bohrung der Drehscheibe (19) hindurch und über die Drehscheibe (19) hinaus in die Prüfkammer (2) ragt, mit einer zentrischen Anschlag- und Spanneinrichtung (38) für das Rohrende (12) sowie in der Prüfkammer (2) drehfest mit einem zentrisch angeordneten Zahnrad (34) verbunden ist, welches mit dem Ritzel (33) im Eingriff steht.

2. Vorrichtung gemäß Anspruch 1,
dadurch gekennzeichnet,
daß die Anschlag- und Spanneinrichtung (38) einen im Rohrende angeordneten pneumatisch aufweitbaren, flexiblen Spannkörper (40) aufweist, dessen Zufuhrleitung für das Spannmedium mit der hohlen Achse (35) in Verbindung steht.

3. Vorrichtung gemäß Anspruch 1 oder 2,
dadurch gekennzeichnet,
daß die Anschlag- und Spanneinrichtung (38) einen Zentrierdorn (41) aufweist, dessen Korpus aus abnehmbaren und mit ihrer Außenkontur ineinanderübergehenden kegelstumpfförmigen Scheiben (56, 57, 58, 59) besteht.

4. Vorrichtung gemäß Anspruch 1 bis 3.
dadurch gekennzeichnet,
daß die Öffnung (10) des prüfseitigen Deckels (4) mit einer pneumatisch aktivierbaren Schlauchdichtung (11) versehen ist.

5. Vorrichtung gemäß Anspruch 1 bis 4,
dadurch gekennzeichnet,
daß an der zur Prüfkammer (2) weisenden Seite der Trennwand (5) und an der zur Antriebskammer (3) weisenden Seite der Drehscheibe (19) zueinander komplementäre, ringförmige Übertragungselemente (45, 46) für elektrische und/oder magnetische Signale angeordnet sind.

## Claims

1. Device for the automatic ultrasonic testing of the end regions of tubes, wherein the tubes are fixed during the test cycle, comprising a test housing (1) of hollow cylindrical shape having a drive chamber (3) and a test chamber (2), wherein sliding bodies (22,23), which are displaceable along the surface of the tube and which have devices for receiving ultrasonic test heads (24,25,26,27), are disposed on one or more guide rods (20,21) parallel to the tube axis, and at least one of these sliding bodies is drivable by way of a rotatable threaded spindle (28), which is disposed parallel to the guide rod, by means of a thread, which is in the sliding body and which is formed complementary to the spindle thread, by turning the threaded spindle parallel to the tube axis, and wherein the end of the test housing on the testing side pointing towards the tube has a lid (4) on the testing side which is provided with a hole (10) for receiving the tube end, and the end of the test housing on the drive side remote from the tube has a separating wall (5), which is provided with a centrical opening for the passing through of a drive shaft and a lid (6) on the drive side which is provided with a centrical opening for the passing through of an axle, and the test chamber of the test housing, which is defined by the lid on the test side and the separating wall, has an inlet and an outlet opening (7,8) for a coupling fluid, and a sealed control opening (9), and the drive chamber of the test housing, which chamber is defined by the separating wall and the lid on the drive side, has a motor (14), characterised in that the longitudinal axis of the test housing (1) lies horizontally and coincides with the longitudinal axis of the tube end (12) to be tested, and the opening (10) in the lid (4) on the test side is formed so as to be sealable with respect to the outer surface of the tube end, the motor (14) is disposed centrally in the drive chamber (3), its torque-transmitting shaft is in the form of a hollow shaft (15), is mounted in the separating wall (5) and the lid (6) on the drive side and projects through the separating wall (5), and is sealed with respect thereto, into the test chamber (2), the end (18) of the hollow shaft which projects into the test chamber (2) is connected in a non-rotatable manner to a round turntable (19), which is substantially adapted to the inner diameter of the test chamber (2), wherein, on the side of the turntable (19) facing the tube end (12), the guide rods (20, 21) are mounted and their axes are spaced from the axis of the turntable (19), but parallel thereto, and the guide rods (20, 21) extend substantially along the length of the test chamber, and wherein the threaded spindle (28), which is disposed parallel to the guide rod (20), of the drivable sliding body (22) is mounted in the turntable (19) and in a holding device (29) on the head, which is on the test side, of the associated guide rod (20) and, close to its mounting (30) in the turntable (19), has a pinion (33) which is non-rotatably connected to the threaded spindle (28), a hollow axle (35), which passes through the drive-side lid (6), is provided which is non-rotatably connected to this drive-side lid (6) and is guided through the hollow shaft (15) of the motor (14) and is mounted in the hollow shaft (15), the hollow axle (35) projects through a central bore, which corresponds to the end (18) of the hollow shaft, of the turntable (19) and beyond the turntable (19) into the test chamber (2), is connected to a centrical stop and tensioning device (38) for the tube end (12) and is non-rotatably connected in the test chamber (2) to a centrically disposed gear wheel (34), which is in engagement with the pinion (33).

2. Device as in claim 1, characterised in that the stop and tensioning device (38), which has a pneumatically expandable, flexible tensioning body (40), is disposed in the tube end and its supply line for the tensioning medium is connected to the hollow axle (35).

3. Device as claimed in claim 1 or 2, characterised in that the stop and tensioning device (38) has a centering mandrel (41), the body of which comprises removable discs (56, 57, 58, 59) having the form of truncated cones and which merge into one another with their outer contour.

4. Device as in claims 1 to 3, characterised in that the opening (10) of the test-side lid (4) is provided with a pneumatically activatable hose seal (11).

5. Device as in claims 1 to 4, characterised in that, on the side of the separating wall (5) facing the test chamber (2) and on the side of the turntable (19) facing the drive chamber (3), there are disposed mutually complementary, annular transmitting elements (45, 46) for electrical and/or magnetic signals.

## Revendications

1. Dispositif pour le contrôle ultrasonore automatique des extrémités de tubes, dans lequel les tubes sont immobilisés pendant le cycle de contrôle,
constitué d'un boîtier de contrôle (1) ayant la forme d'un cylindre creux et comportant une chambre de commande (3) et une chambre de contrôle (2),
dans lequel, sur une ou plusieurs tiges de guidage (20,21) parallèles à l'axe du tube, des corps coulissants (22,23) déplaçables le long de la surface du tube sont disposés avec des dispositifs pouvant accueillir des têtes de contrôle ultrasonore (24,25,26,27), et au moins un de ces corps coulissants peut être entraîné parallèlement à l'axe du tube, via une broche filetée (28) rotative, disposée parallèlement à la tige de guidage, au moyen d'un filet complémentaire au filet de la tige, disposé dans le corps coulissant, par rotation de la broche filetée, et dans lequel l'extrémité côté contrôle, orientée vers le tube, du boîtier de contrôle présente un couvercle (4) côté contrôle doté d'une ouverture (10) pour recevoir l'extrémité du tube,
et l'extrémité côté commande, opposée au tube, du boîtier de contrôle présente une paroi de séparation (5) pourvue d'une ouverture centrée pour le passage d'un arbre menant, ainsi qu'un couvercle (6) côte commande doté d'une ouverture centrée pour le passage d'un axe,
et la chambre de contrôle du boîtier de contrôle, limitée par le couvercle côté contrôle et la paroi de séparation, présente une ouverture d'admission et d'évacuation (7,8) pour un liquide de liaison, ainsi qu'une ouverture de contrôler (9) fermée,
et la chambre de commande du boîtier de contrôle, limitée par la paroi de séparation et par le couvercle côté commande, présente un moteur (14),
caractérisée en ce que
l'axe longitudinal du boîtier de contrôle (1) est horizontal et coïncide avec l'axe longitudinal de l'extrémité du tube à contrôler (12), et en ce que l'ouverture (10) dans le couvercle (4) côté contrôle est obturable par rapport à la surface extérieure de l'extrémité du tube,
le moteur (14) est disposé centralement dans la chambre de commande (3), son arbre de transmission du moment de rotation a la forme d'un arbre creux (15), est monté à rotation dans la paroi de séparation (5) et le couvercle (6) côté commande et pénètre dans la chambre de contrôle (2), en traversant de manière étanche la paroi de séparation (5),
l'extrémité de l'arbre creux (18) pénétrant dans la chambre de contrôle (2) est reliée de manière fixe en rotation à un disque de rotation (19) adapté essentiellement au diamètre intérieur de la chambre de contrôle (2),
dans lequel les tiges de guidage (20, 21) sont montées sur la face du disque rotatif (19) orientée vers l'extrémité du tube (12) et leurs axes sont éloignés de l'axe du disque rotatif (19) tout en étant parallèles à celui-ci et les tiges de guidage (20, 21) s'étendent essentiellement sur la longueur de la chambre de contrôle,
et dans lequel la broche filetée (28) du corps coulissant commandable (22), disposée parallèlement à la tige de quidage (20) est montée à rotation dans le disque rotatif (19) et dans un dispositif de maintien (29) sur la tête côté contrôle de la tige de guidage correspondante (20) et présente, à proximité de son montage (30) dans le disque rotatif (19), un pignon (33) relié de manière fixe en rotation à la broche filetée (28),
un axe creux (35) passant par le couvercle côté commande (6) est relié de manière fixe en rotation à ce couvercle côté commande (6) et traverse l'arbre creux (15) du moteur (14) et est monté dans le dit arbre creux (15),
l'axe creux (35) passe par un alésage central du disque rotatif (19) correspondant à l'extrémité de l'arbre creux (18) pour pénétrer à travers le disque rotatif (19) dans la chambre de contrôle (2), est relié de manière fixe en rotation à un dispositif de butée et de serrage central (38) pour l'extrémité du tube (12), ainsi qu'à une roue dentée (34) centrale, qui est en prise avec le pignon (33) que dans la chambre de contrôle (2).

2. Dispositif selon la revendication 1,
caractérisé en ce que le dispositif de butée et de serrage (38) présente un corps de serrage (40) flexible, extensible pneumatiquement, disposé dans l'extrémité du tube, dont la canalisation d'amenée de l'agent de serrage est en liaison avec l'arbre creux (35).

3. Dispositif selon la revendication 1 ou 2,
caractérisé en ce que le dispositif de butée et de serrage (38) présente un mandrin de centrage (41) dont le corps est constitué de disques tronconiques (56, 57, 58, 59) amovibles s'insérant l'un dans l'autre avec son profil extérieur.

4. Dispositif selon les revendications 1 à 3,
caractérisé en ce que l'ouverture (10) du couvercle (4) côté contrôle est pourvue d'un joint tubulaire (11) activable pneumatiquement.

5. Dispositif selon les revendications 1 à 4,
caractérisé en ce que sur la face de la paroi de séparation (5) orientée vers la chambre de contrôle (2) et sur la face du disque rotatif (19) orientée vers la chambre de commande (3), des éléments de transmission annulaires complémentaires l'un par rapport à l'autre (45, 46) sont disposés pour des signaux électriques et/ou magnétiques.
